# EUROPEAN PATENT APPLICATION

(11) **EP 0 553 601 A2**
(43) Date of publication of application: **04.08.1993**
(21) Application number: 92830562.2
(22) Date of filing: 08.10.1992
(51) Int. Cl.: F16H 15/22

(54) **A stepless speed change gear**

(30) Priority: 30.01.1992 IT BG920003
(71) Applicant: Gilberti, Pietro, Bergamo (IT)
(72) Inventor: Gilberti, Pietro, Bergamo (IT)
(74) Representative: Mercurio, Franco

(57) **Abstract**

A stepless speed change gar provided with cones (21) and rings (25), suitable for high speed and high power applications. Said cones (21) are mounted on a drive shaft (22) and in meshing contact with rings (25) mounted inside a tube (26) within which shaft (22) carrying cones (21) is rotatably mounted, in such a way that the speed conversion is provided by changing the distance between cones (21) and rings (25). The change gear has an optimum mechanical efficiency, it runs very quietly, therefore it is suitable for use on motor vehicles.

## Description

This invention concerns a stepless speed change gear featuring improvements and advantages compared to the previous art comprising speed change gears provided with a plurality of coaxial cones carried by a shaft and transmitting motion to a plurality of discs carried by a shaft as well, wherein the speed of the latter is changed by changing the distance between the pair of shafts.

Said previous art speed change gears had a low mechanical efficiency in that they wasted approximately 15% of the power through friction between cones and discs.

It was an object of this invention to provide a stepless speed change gear having low power losses caused by friction whereby its mechanical efficiency is improved.

The features and advantages of this invention should become readily apparent from the following description of a non limiting embodiment thereof, made in comparison with the previous art and in reference to the attached drawings, wherein:
Figures 1 and 2 are schematics of an elevational view and of a plan view respectively of a first embodiment of a speed change gear pertaining to the state of the art;
Figure 3 is an elevational view of a second embodiment of a speed change gear still pertaining to the state of the art;
Figures 4 and 5 show an elevational view and a plan view of the stepless speed change gear of this invention;
Figure 6 is a schematic of the contact area between the change gear members of the previous art;
Figure 7 is a schematic of the contact area between the change gear members of this invention;
Figures 8 and 9 show cross sections along axes X-X and Y-Y of Figure 10, respectively;
Figure 10 shows a change gear elevational view;
Figures 11, 12 and 13 are schematics of examples of application of the speed change gear;
Figure 14 shows a cross section of the complete change gear assembly;
Figure 15 shows a detail of the change gear shown in Figure 14;
Figure 16 shows the cross section of a member shown in Figure 14.

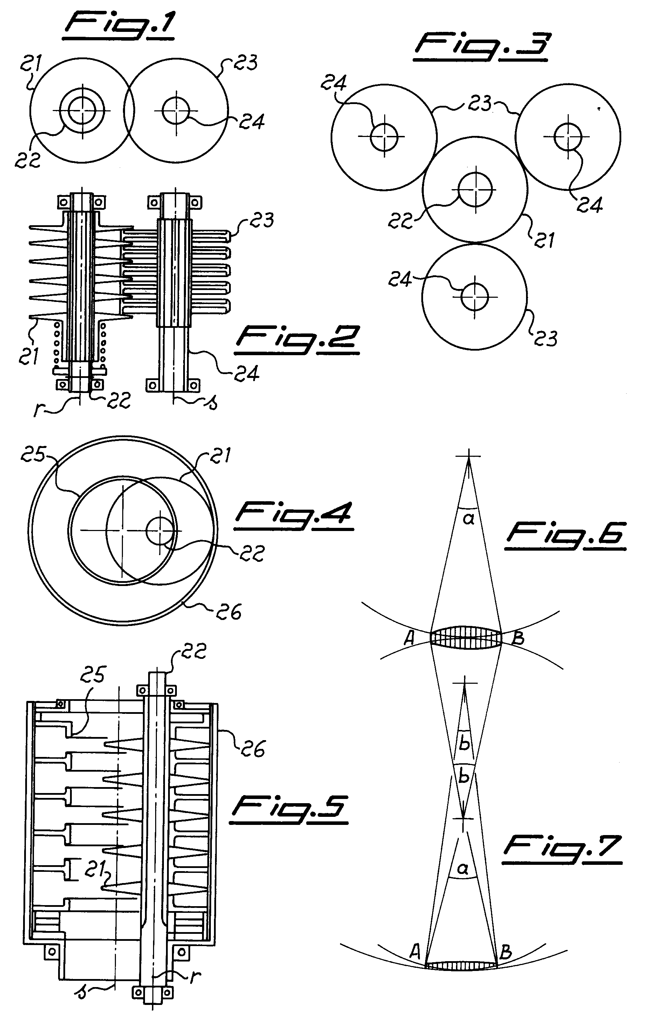

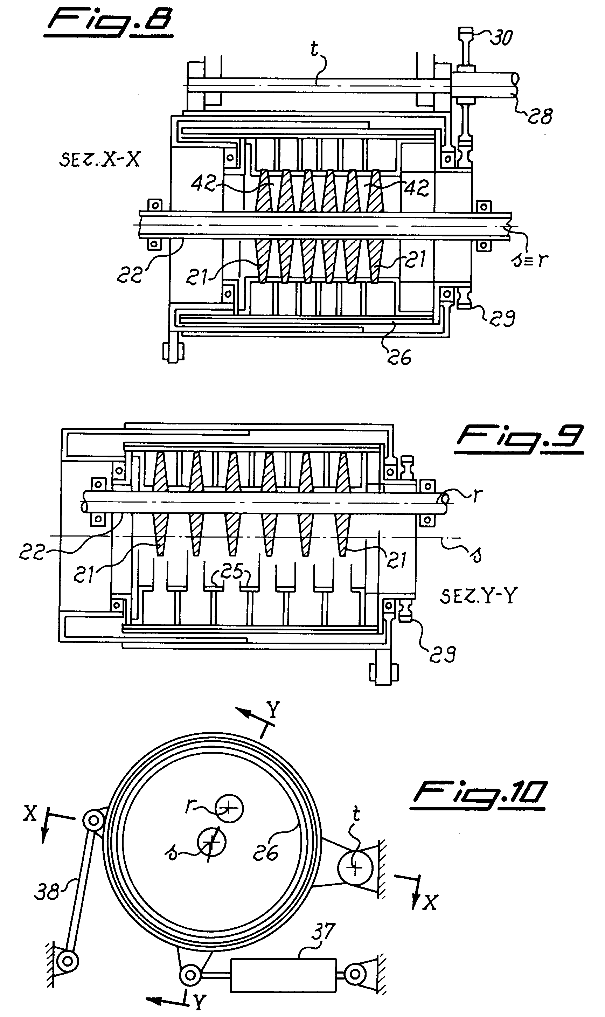

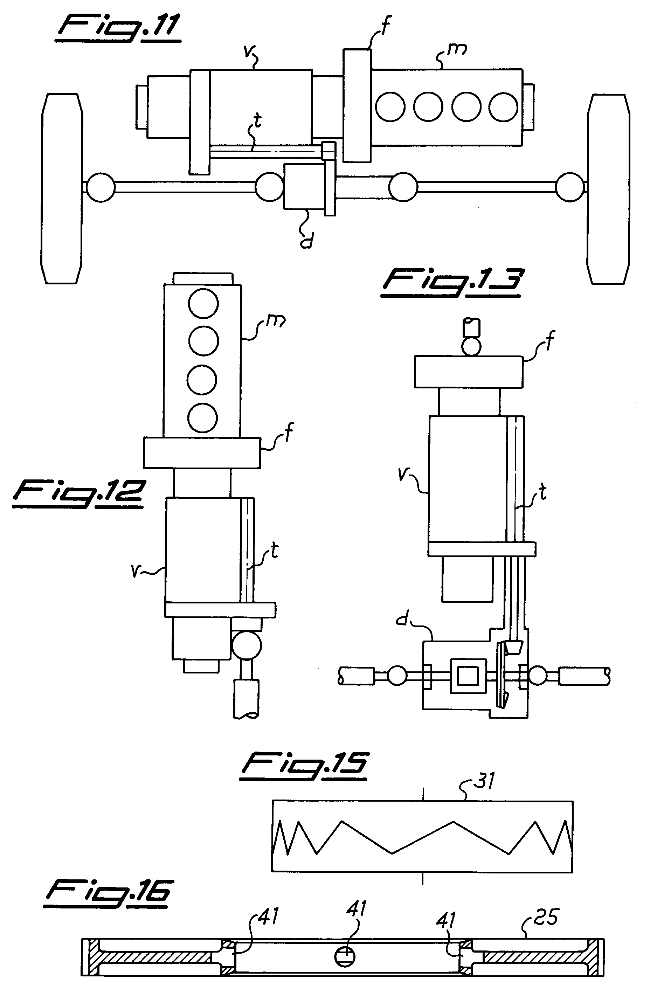

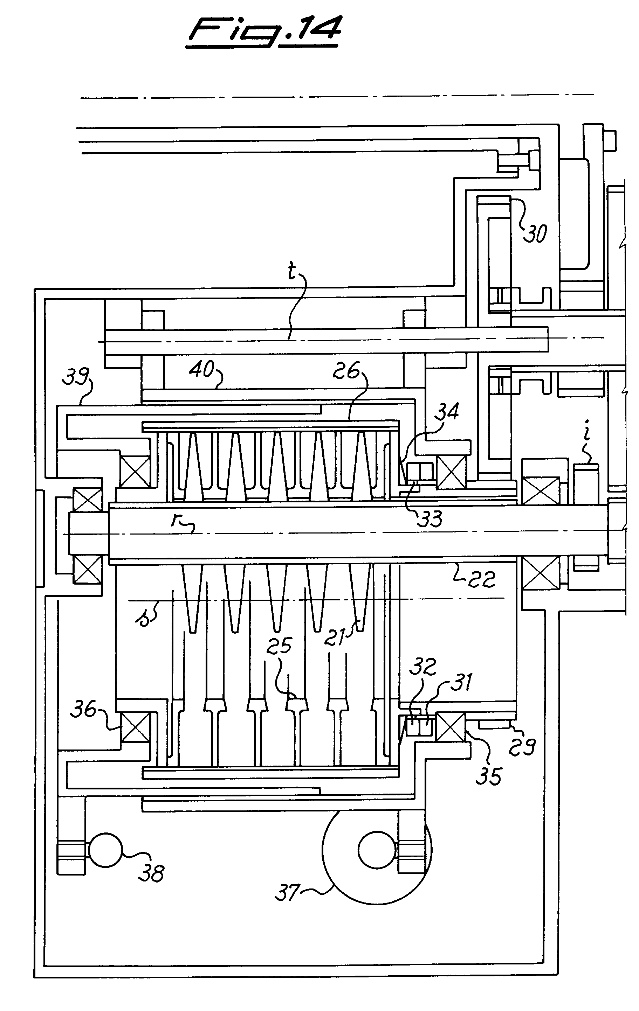

Referring now to Figures 1 and 2, the stepless speed change gear of the previous art includes a plurality of coaxial cones 21 carried by a single splined shaft 22 rotating about axis r, which transmits the motion to a plurality of discs 23 carried by a splined shaft 24, driven through the coupling between cones 21 and discs 23 rotating about axis s of splined shaft 24. In said speed change gear, according to a first embodiment, the speed is changed by changing the distance between the pair of shafts 22 and 24.

According to a further embodiment of the previous art, in order to enable the cones to slide more easily along the shaft, use has been made of three shafts 24 whose discs 23 mesh with cones 21 carried by shaft 22. Such embodiment is shown in Figure 3.

In the above Figures there isn't shown neither the devices for mutually displacing the shafts, nor the gears for transmitting motion to the change gear output shaft.

It was an object of this invention to provide a speed change gear that, while using a plurality of cones 21 carried by a single splined shaft 22, has an improved mechanical efficiency. As it is shown in Figures 4 and 5, in the speed change gear of this invention discs 23 and shafts 24 are replaced by rings 25 slidingly mounted within an internally splined tube 26. Shaft 22 rotates inside rings 25. The change of speed of the tube is obtained by changing the center distance between shaft and tube. Thus, while in Figures 1, 2 and 3 the meshing contact between cones and discs was taking place at the disc outer diameter, in Figures 4 and 5 the meshing contact between cones and rings is taking place at the ring inner diameter whereat an increased thickness is provided. In Figures 1, 2, 3, having referenced A-B the arc of meshing contact (Figure 6), the relative rotation between cones and discs is a + b, while in this change gear (Figure 7) the relative rotation is a - b. The value of a - b is approximately one third of a + b, therefore also the frictional power losses are one third. Since the previous change gears had friction power losses of about 15%, the change gear of this invention has a power loss of about 5% whereby the efficiency rises from 85% to 95%.

When, in the change gear, the pair of axes of input shaft 22 and of splined tube 26 respectively, coincide as it is shown in Figure 8, the value of a - b becomes zero and the efficiency rises to one, i.e. in top gear. This situation is particularly suitable when a vehicle rides on a highway. In said condition the noise level of the change gear is also very low, and it does not wear.

Figures 8 and 9 are schematics of the change gear in a most typical embodiment. In Figure 8, axis s of tube 26 and axis r of shaft 22 coincide, whereby the gear ratio is one.

In Figure 9, where the two axes are displaced a maximum distance apart, the condition is one of maximum gear ratio (about one fourth). The gear ratio is approximately equal to the ratio between inner and outer diameter of the cones. There are a large number of ways to change the center distance between shafts s and r. In Figure 10 there is shown, as an example, a system which, while leaving axis r of input shaft 22 stationary, enables axis s of tube 26 to be displaced by rotating about a third axis t, coaxial with output shaft 28 (Figure 8). In order to transmit to shaft 28 the rotation of tube 26, it is sufficient a set of two gears 29 and 30, mounted on tube 26 and on shaft 28 respectively. Obviously, they keep their center distance constant while the velocity ratio changes through displacement of the rings relative to the cones. This solution may be tailored for vehicles having a front engine, transverse shaft and front wheel drive.

The assembly comprising engine m, change gear v, centrifugal clutch f, differential gear d, looks in this case like what is shown in Figure 11. The gears of reverse may receive their motion directly from primary shaft r by inserting an intermediate gear i (Figure 14) without going through the change gear. In fact, riding in reverse doesn't usually require changes in the gear ratio.

Obviously, the change gear may be used as well on vehicles having a front engine and a rear wheel drive; this is true both when the change gear is close to the engine as it is shown in Figure 12, and when it is close to the differential gear, as it is shown in Figure 13. In these Figures 12 and 13 the same reference symbols as in Figure 11 have been used.

An important portion of the change gear is the one which enables the contact pressure between cones 21 ad rings 25 (Figures 4 and 5) to be varied according to the transmitted tangential force. Since the contact pressure causes a frictional power loss, desirably it is just enough to transmit the motion, but not too large. In Figure 14 there is shown gear 29 which drives gear 30 by receiving motion from a disc 31 having slanting front teeth, driven in motion by a similar disc 32. The latter slides on a splined sleeve 33 connected to tube 26. A spring 34 keeps discs 31 e 32 permanently engaged. Figure 15 is a side view showing these discs with slanting front teeth. Rolling contact bearing 35 and the similar bearing 36 support splined tube 26 and in addition they move away from each other or closer to each other while cones 21 mesh more or less deeply among rings 25. In fact, when hydraulic ram 37 raises cylinder 40, rod 38 retains an outer point of cylinder 39, according to Figures 10 and 14. This in turn causes cylinder 39 to rotate relative to cylinder 40 (Figure 14). Since the latter are connected through a helical coupling, for instance a multi-start thread, the cones and the rings are continuously in contact. The load is provided by toothed discs 31 and 32, according to the drive torque acting on rings 25 and to the opposing torque acting on gear 29. Spring 34 prevents separation between the parts when one of the above torques becomes zero.

Spring 34 has a minimum deflection and the ratio between the torques and the load between cones and rings may be changed at the design stage.

Rings 25, one of which is shown in Figure 16, have radial openings 41 at the inner diameter thereof, where the thickness is larger. The openings are provided to allow cooling and lubricating oil to come out from within shaft 22 in the case of top gear, i.e. when two axes r and s are coincident. In fact, in this condition, if said openings 41 were not provided, the oil would fill completely volumes 42 (Fig. 8) beween the cones and the rings, without being able to flow out of said volumes causing a problem in that, the oil being under pressure, it would cause the cones to slip relative to the rings.

It is understood that variations and/or modification may be made to the stepless speed change gear according to this invention, without exceeding the scope of protection of the invention, as defined in the following claims.

## Claims

1. A stepless speed change gear provided with a plurality of cones (21) mounted on a splined shaft (22) rotating around its longitudinal axis (r), said cones (21) being in meshing contact with a plurality of parts (25) mounted on a member (26) whose rotational axis (s) lies parallel to axis (r) of shaft (22), said member (26) and said shaft (22) adapted to be moved while remaining parallel to each other, in order to change the speed of member (26) relative to shaft (22), the change gear being characterized in that member (26) is an internally splined tube and parts (25) comprise rings mounted within tube (26) and shaft (22) is arranged inside tube (26), whereby cones (21) rotate in meshing contact with rings (25), said contact being variable, together with the speed of tube (26), according to the displacement of shaft (22) relative to tube (26).

2. The change gear according to claim 1, characterized in that tube (26) is mechanically connected to an output shaft (28) which keeps a constant distance from rotational axis (s) of tube (26).

3. The change gear according to the previous claims, characterized in that splined tube (26) carries, connected thereto, a disc (31) provided with front slanting teeth facing a similar toothed disc (32) which is in turn mechanically connected to an output gear (29) receiving motion from tube (26), said gear (29) meshing with a gear (30) mounted on output shaft (28), the relative displacement between cones (21) and rings (25), accompanied by a change in the torque between said discs (31, 32), causing a load change between cones (21) and rings (25).

4. The change gear according to the previous claims characterized in that a helical coupling between a pair of cylinders (39, 40) supporting the ends of tube (26) keeps cones (21) in meshing contact with rings (25) while shaft (22) gets displaced relative to tube (26).

5. The change gear according to the previous claims, characterized in that rings (25), at the inner diameter thereof, have an increased thickness and are provided with one or more radial openings (41).
